# EUROPEAN PATENT APPLICATION

(11) **EP 2 200 393 A1**
(43) Date of publication of application: **23.06.2010**
(21) Application number: 08773112.1
(22) Date of filing: 04.07.2008
(51) Int. Cl.: H04W 84/00

(54) **NETWORK INFORMATION LIST UPDATE NUMBER PROCESS DEVICE AND MOBILE TERMINAL**

(30) Priority: 14.09.2007 CN 200720178638 U
(71) Applicant: ZTE Corporation, Shenzhen, Guangdong 518057 (CN)
(72) Inventor: ZHU, Xiaoguang, Guangdong 518057 (CN); WANG, Biao, Guangdong 518057 (CN); JIANG, Hua, Guangdong 518057 (CN); FANG, Yuanli, Guangdong 518057 (CN)
(74) Representative: Ilgart, Jean-Christophe
(86) International application number: PCT/CN2008/071555
(87) International publication number: WO 2009/033383

(57) **Abstract**

The present invention discloses a device for processing a network information list updating serial number, which includes: a parsing module configured to parse a network information list updating serial number from a multiplex frame head information of a multiplex frame received by a terminal; a comparing module, connected to the parsing module, and configured to compare the network information list updating serial number parsed by the parsing module with a network information list updating serial number in a network information list cached by the terminal; a determining module, connected to the comparing module, and configured to determine whether to update the network information list according to the comparison result of the comparing module; and a processing module, connected to the determining module, and configured to perform related processing to the network information list updating serial number according to the determination result of the determining module. A mobile terminal is also disclosed in the present invention. By using the present invention, the network information list can be updated in time; therefore the communication efficiency is improved.

## Description

### Filed of the Invention

The present invention relates to the field of digital mobile communication, and in particular to a device for processing a network information list updating serial number, which is used by a mobile multimedia broadcasting terminal to process the network information list updating serial number in a multiplex frame carrying services. In addition, the present invention also relates to a mobile terminal which uses the device for processing the network information list updating serial number.

### Background of the Invention

Nowadays, the digital mobile multimedia broadcasting technology and the standards thereof are developing rapidly, for example, the Digital Video Broadcast Handheld (DVB-H) reception in Europe, the Media Forward Link Only (Media FLO) in the US, and the China Mobile Multimedia Broadcasting (CMMB), etc., all of which can provide their terminal users with many service contents, for instance, advertisements, weather forecast, news, sports programs, entertainment, multimedia broadcasting dramas, movies, etc., and the users are able to select their favorite mobile multimedia broadcasting service programs.

The mobile multimedia broadcasting sends multimedia broadcasting services in a time division manner, in which the duration of a broadcast channel frame is 1 second, consisting of 40 time slots of 25 milliseconds. One or more time slots can transmit the data encapsulated in one multiplex frame. In the structure of the multiplex frame of the mobile multimedia broadcasting, the multiplex frame is divided into three parts: a multiplex frame head, a multiplex frame payload, and a padding. Each mobile multimedia broadcasting service is encapsulated, as a multiplex sub-frame, in the multiplex frame payload carrying services, each mobile multimedia broadcasting control information list is encapsulated, as a multiplex sub-frame, in a multiplex sub-frame carrying control information, and the change indicating information of each control information list is encapsulated in each multiplex frame head. Therefore, the mobile multimedia broadcasting terminal can update, according to the update indication of a related control information list in the multiplex frame head, a related system control information list in time, such that the terminal does not have to receive the control information every time so as to save the power consumption of the terminal.

A network information list is one kind of the control information list of the mobile multimedia broadcasting, wherein the network information list comprises the corresponding configuration information of the mobile multimedia broadcasting. The updating serial number of the network information list, besides being presented in the multiplex frame head, is also contained in the network information list.

However, a technology for processing the network information list updating serial number, so as to enable the terminal to update the network information list in time has not been realized so far.

### Summary of the Invention

The present invention is made upon considering the above problem, thus the main object of the present invention is to provide a device for processing a network information list updating serial number and a mobile terminal.

The device for processing a network information list updating serial number according to the present invention includes: a parsing module configured to parse a network information list updating serial number from a multiplex frame head information of a multiplex frame received by a terminal; a comparing module, connected to the parsing module, and configured to compare the network information list updating serial number parsed by the parsing module with a network information list updating serial number in a network information list cached by the terminal; a determining module, connected to the comparing module, and configured to determine whether to update the network information list according to the comparison result of the comparing module; and a processing module, connected to the determining module, and configured to perform related processing to the network information list updating serial number according to the determination result of the determining module.

Wherein, if the comparison result of the comparing module is that the network information list updating serial number parsed by the parsing module is different from the network information list updating serial number in the network information list cached by the terminal, the determining module determines that updating the network information list is needed. Thereafter the processing module performs the related processing. Wherein, the related processing includes: the processing module obtains an advance indication of the control information list updating serial number from the multiplex frame head information and receives a control information multiplex frame in a subsequent broadcast channel frame specified by the advance indication of the control information list updating serial number; and the processing module updates and caches the information of the network information list.

In the other aspect, if the network information list updating serial number parsed by the parsing module is the same as the network information list updating serial number in the network information list cached by the terminal, the determining module determines that updating the network information list is not needed.

In addition, the multiplex frame head comprises at least the network information list updating serial number and the advance indication of the control information list updating serial number.

The aforementioned device for processing the network information list updating serial number can be applied to various kinds of mobile terminals such as mobile telephone, PDA, etc. The mobile terminals using the aforementioned device fall within the scope of the protection defined by the claims in the present invention.

By using the technical solution of the present invention as mentioned above, the terminal is enabled to update the network information list in time so that the communication efficiency is increased.

### Brief Description of the Accompanying Drawings

The drawings illustrated here provide a further understanding of the present invention and form a part of the present application. The exemplary embodiments and the description thereof are used to explain the present invention without unduly limiting the scope of the present invention, wherein:

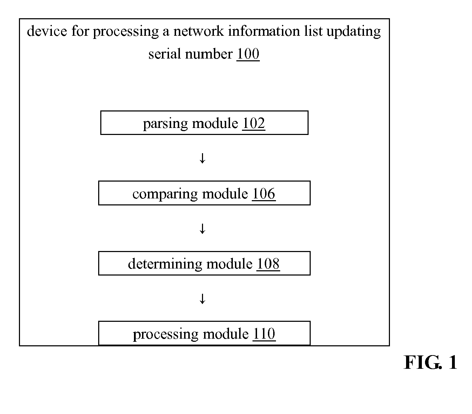

Figure 1 is a block diagram showing the device for processing a network information list updating serial number according to the embodiment of the device of the present invention.

### Detailed Description of the Preferred Embodiments

As shown in Fig. 1, a device for processing a network information list updating serial number 100 is provided. The device comprises: a parsing module 102, a comparing module 104, a determining module 106, and a processing module 108. Each of the aforesaid modules will be described hereinafter in detail.

The parsing module 102 is configured to parse a network information list updating serial number from a multiplex frame head information of a multiplex frame received by a terminal; preferably, the multiplex frame head comprises at least the network information list updating serial number and an advance indication of a control information list updating serial number.

The comparing module 104 is connected to the parsing module 102, and is configured to compare the network information list updating serial number parsed by the parsing module 102 with a network information list updating serial number in a network information list cached by the terminal.

The determining module 106 is connected to the comparing module 104, and is configured to determine whether to update the network information list according to the comparison result of the comparing module 104.

The processing module 108 is connected to the determining module 106, and is configured to perform related processing to the network information list updating serial number according to the determination result of the determining module 106.

Wherein, if the comparison result of the comparing module 104 is that the network information list updating serial number parsed by the parsing module 102 is different from the network information list updating serial number in the network information list cached by the terminal, the determining module 106 determines that updating the network information list is needed. Thereafter the processing module 108 performs the related processing. Wherein, the related processing includes: the processing module 108 obtains an advance indication of the control information list updating serial number from the multiplex frame head information, and receives a control information multiplex frame in a subsequent broadcast channel frame specified by the advance indication of the control information list updating serial number; the processing module 108 updates and caches the information of the network information list.

For instance, the aforementioned broadcast channel frame is specified by the advance indication of the control information list updating serial number. For example, as shown in the following table, the advance indication of the control information list updating serial number is a 2-bit field, wherein, "0" represents that a mobile multimedia broadcasting front end system sends, one broadcast channel frame ahead, each control information list updating serial number, or the terminal receives, after receiving the updating serial number, a control channel multiplex frame in the first subsequent broadcast channel frame; "1" represents that the mobile multimedia broadcasting front end system sends, two broadcast channel frames ahead, each control information list updating serial number, or the terminal receives, after receiving the update number, the control channel multiplex frame in the second subsequent broadcast channel frame; "2" represents that the mobile multimedia broadcast front end system sends, three broadcast channel frames ahead, each control information list updating serial number, or the terminal receives, after receiving the update number, the control channel multiplex frame in the third subsequent broadcast channel frame; and "3" represents maintaining the original broadcast channel frame to receive the control channel multiplex frame.

| value | meaning |
|---|---|
| 0 | The front end system informs the terminal one broadcast channel frame ahead or the terminal receives in the first subsequent broadcast channel frame. |
| 1 | The front end system informs the terminal two broadcast channel frames ahead or the terminal receives in the second subsequent broadcast channel frame. |
| 2 | The front end system informs the terminal threes broadcast channel frames ahead or the terminal receives in the third subsequent broadcast channel frame. |
| 3 | The original broadcast channel frame is maintained. |

In the other aspect, if the network information list updating serial number parsed by the parsing module 102 is the same as the network information list updating serial number in the network information list cached by the terminal, the determining module 106 determines that updating the network information list is not needed.

With the aid of the above mentioned technical solution of the present invention, the terminal is enabled to update the network information list in time, so that communication efficiency is increased.

The above mentioned device for processing the network information list updating serial number can be applied to various kinds of mobile terminals such as mobile telephone, PDA, laptop computer, MP3, MP4, digital camera, etc., particularly applied to a mobile multimedia broadcasting terminal. The device can be either embedded in the interior of the mobile terminal or used in combination with the mobile terminal in the exterior of the mobile terminal, both of which can realize the processing to the network information list updating serial number, and further realize updating the network information list in time. This would be obvious for those skilled in the art. The mobile terminals using the aforementioned device fall within the scope of the protection defined by the claims of the present invention.

The descriptions above are only the preferable embodiment of the present invention, which are not used to restrict the present invention. For those skilled in the art, the present invention may have various changes and variations. Any amendments, equivalent substitutions, improvements, etc. within the spirit and principle of the present invention are all included in the scope of the protection of the present invention.

## Claims

1. A device for processing a network information list updating serial number, **characterized by**, comprising:
a parsing module configured to parse a network information list updating serial number from a multiplex frame head information of a multiplex frame received by a terminal;
a comparing module, connected to said parsing module, and configured to compare said network information list updating serial number parsed by said parsing module with a network information list updating serial number in a network information list cached by the terminal;
a determining module, connected to said comparing module, and configured to determine whether to update said network information list according to the comparison result of said comparing module; and
a processing module, connected to said determining module, and configured to perform related processing to said network information list updating serial number according to the determination result of said determining module.

2. The device for processing a network information list updating serial number according to Claim 1, **characterized in that**, when said comparison result of said comparing module is that said network information list updating serial number parsed by said parsing module is different from said network information list updating serial number in said network information list cached by the terminal, said determining module is configured to determine that updating said network information list is needed.

3. The device for processing a network information list updating serial number according to Claim 2, **characterized in that**,
said processing module is configured to obtain an advance indication of a control information list updating serial number from said multiplex frame head information, and receive a control information multiplex frame in a subsequent broadcast channel frame specified by said advance indication of said control information list updating serial number; and
said processing module is configured to update and cache the information of said network information list.

4. The device for processing a network information list updating serial number according to Claim 1, **characterized in that**, when said network information list updating serial number parsed by said parsing module is the same as said network information list updating serial number in said network information list cached by the terminal, said determining module is configured to determine that updating said network information list is not needed.

5. The device for processing a network information list updating serial number according to Claim 1, **characterized in that**, said multiplex frame head comprises at least said network information list updating serial number and said advance indication of the control information list updating serial number.

6. A mobile terminal, comprising the device for processing a network information list updating serial number according to any one of Claims 1 to 5.
